# EUROPÄISCHE PATENTANMELDUNG

(11) **EP 2 754 528 A1**
(43) Veröffentlichungstag der Anmeldung: **16.07.2014**
(21) Anmeldenummer: 13151153.7
(22) Anmeldetag: 14.01.2013
(51) Int. Cl.: B23K 26/34, B23P 6/00, F01D 5/00

(54) **Verfahren zum auftragschweissen eines Substrates durch Laserumschmelzen einer vorgefertigten Formen**

(71) Anmelder: Siemens Aktiengesellschaft, 80333 München (DE)
(72) Erfinder: Bostanjoglo, Georg, 14163 Berlin (DE); Burbaum, Bernd, 14612 Falkensee (DE)

(57) **Zusammenfassung**

Durch die Verwendung eines vorgefertigten passgenauen Formteils (7) kann das Auftragsschweißen in verbesserter Form durchgeführt werden.

## Beschreibung

Die Erfindung betrifft das Laserumschmelzen unter Verwendung vorgefertigter Formen.

Auftragsscheißung, insbesondere Laserauftragsschweißungen werden oft durchgeführt, um neues Material aufzutragen, das durch Auftreten von Rissen oder durch einen Wandverlust eines Substrats aufgrund von Erosion entstanden ist.

Das Pulverauftragsschweißen bedarf immer der Zuführung eines Pulvers, das in einem Gasfluss zugeführt werden und gleichzeitig aufgeschmolzen werden muss. Dies führt aber oft zu Prozessvariationen.

Es ist daher Aufgabe der Erfindung o. g. Problem zu lösen.

Die Aufgabe wird gelöst durch ein Verfahren gemäß Anspruch 1.

In den Unteransprüchen sind weitere Maßnahmen aufgelistet, die beliebig miteinander kombiniert werden können, um weitere Vorteile zu erzielen.

Es zeigen:
- Figur 1 - 3: schematisch den Ablauf des erfindungsgemäßen Verfahrens,
- Figur 4: eine Liste von Superlegierungen,
- Figur 5: eine Turbinenschaufel.

Die Figuren und die Beschreibung stellen nur Ausführungsbeispiele der Erfindung dar.

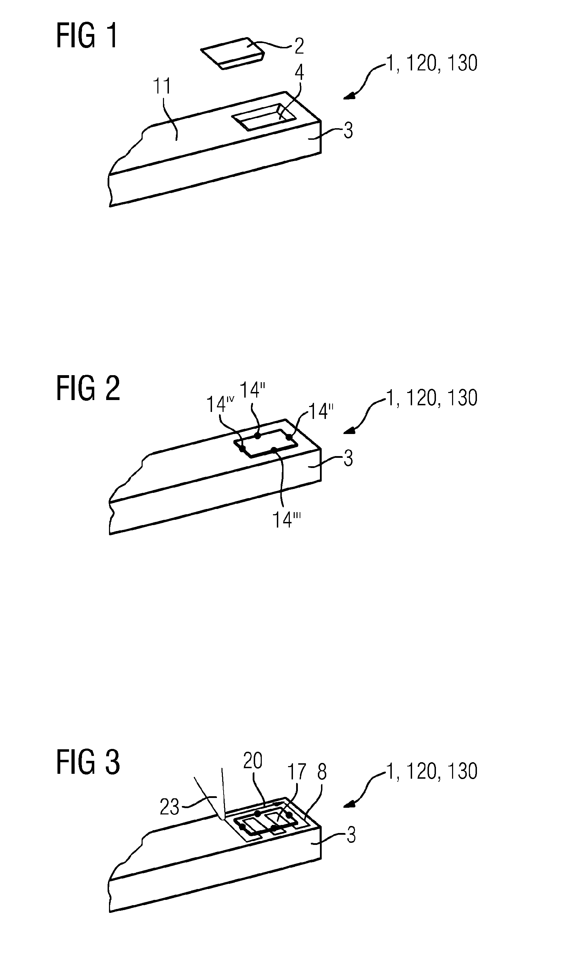

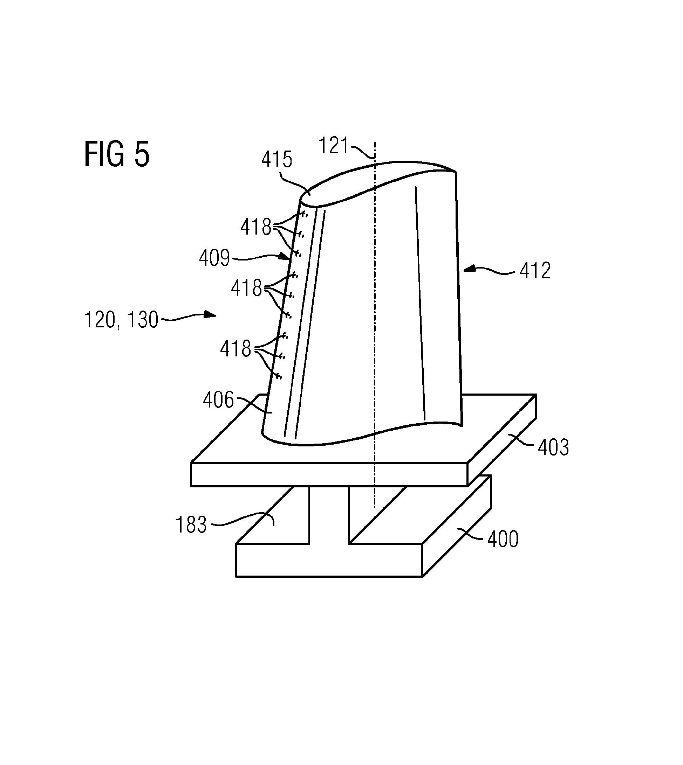

Figur 1 zeigt eine Oberfläche 11 eines Substrats 3, das zur Herstellung eines Bauteils 1, 120, 130 (Fig. 5) verwendet wird.

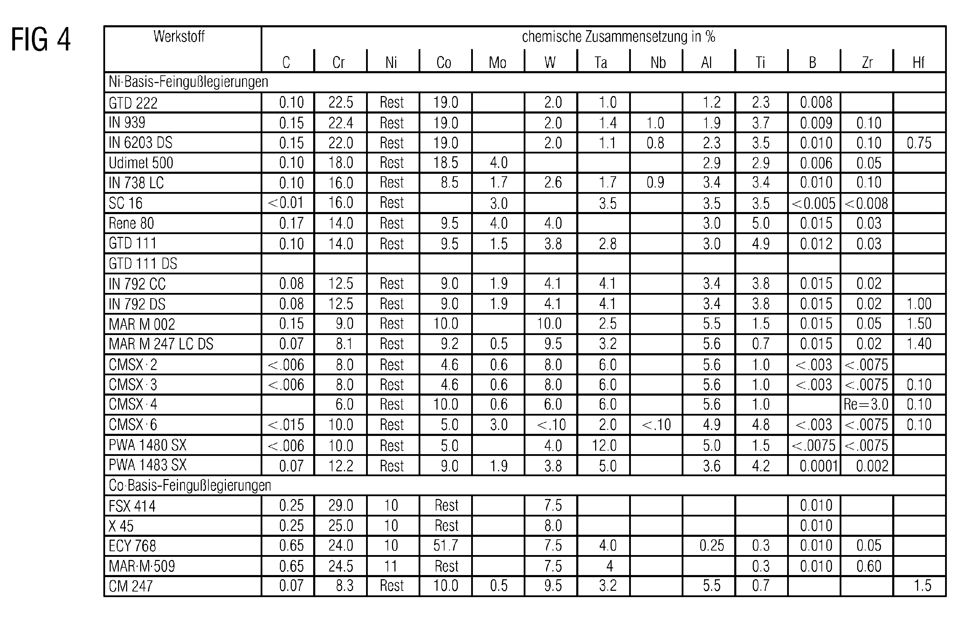

Das Bauteil 1 ist vorzugsweise eine Turbinenschaufel 120, 130 und das Substrat 3 weist vorzugsweise eine nickel- oder kobaltbasierte Superlegierung auf, insbesondere gemäß Figur 4.

In einem Bereich des Substrats 3 entstand durch den Einsatz des Bauteils 1, 120, 130 ein Wanddickenverlust oder es 3 wies dort ein Riss auf, der entsprechend ausgemuldet wurde. Es wird in beiden Fällen eine zu den Seiten offene oder geschlossene Mulde 4 mit einer definierten Kontur erzeugt.

Entsprechend der Kontur und der Tiefe der Mulde 4 wird ein vorgefertigtes Formteil 7 angefertigt, das ziemlich genau und möglichst abschließend in die Mulde 4 hineinpasst, wie es in Figur 2 dargestellt ist.

Das vorgefertigte Formteil 7 kann ein von dem Substrat 4 verschiedene Materialien aufweisen, die sich besser aufschmelzen lassen oder z.B. dasselbe Material wie das Substrat 3 sein.

Vorzugsweise ist das Material des Formteils 7 kein Lotmaterial, enthält also kein Bor (B) und/oder kein Silizium (Si), es sei denn, es ist eine nickelbasierte Superlegierung gemäß der Figur 4 oder ein Material gemäß des Substrats 3, das Bor (B) und/oder Silizium (Si) enthält.

Das Formteil 7 ist massiv und starr.

Vor der weiteren Verarbeitung kann das Formteil 7 vorzugsweise durch Punktschweißungen 14', 14'',... an das Substrat 3 befestigt werden.

Mit einem Schweißstrahl 23, insbesondere einem Laserstrahl, wird gemäß Figur 3 zumindest die Oberfläche 17 des Formteils 7 abgefahren und sukzessive umgeschmolzen, wobei auch ein Randbereich 20 der Mulde 4, also ein Teil des Substrats 3 miterfasst wird.

Bei dem neuen Verfahren muss kein Zusatzmaterial oder kein Pulver hinzugefügt werden und auch die Nachbearbeitungsdauer verringert sich dadurch.
Es muss nicht das gesamte Formteil 7 auf einmal aufgeschmolzen werden, sondern das Formteil 7 wird sukzessive aufgeschmolzen und erstarren gelassen.
Dadurch entstehen auch keine übereinander angeordneten Schweißbahnen und ein kontrollierter und geringer Wärmeeintrag pro Zeit wird erreicht.

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zum Auftragsschweißen eines Substrats (3), bei dem ein vorgefertigtes Formteil (7) in eine Vertiefung (4) eingesetzt wird,
das (7) vorzugsweise die Vertiefung (4) vollständig ausfüllt, und
wobei mit einem Schweißstrahl das Formteil (7) in das Substrat (3) durch vollständiges Umschmelzen eingeschweißt wird.

2. Verfahren nach Anspruch 1,
bei dem ein Laser verwendet wird.

3. Verfahren nach einem oder beiden der Ansprüche 1 oder 2,
bei dem das Material des Formteils (7) das gleiche Material aufweist wie das Material des Substrats (3).

4. Verfahren nach einem oder mehreren der Ansprüche 1 bis 3,
bei dem ein Schweißstrahl (23) das Formteil (7) sukzessive aufschmilzt und erstarren lassen lässt.

5. Verfahren nach einem oder mehreren der Ansprüche 1 bis 4,
bei dem das Substrat (3) zumindest teilweise (20) mit aufgeschmolzen wird.

6. Verfahren nach einem oder mehreren der Ansprüche 1 bis 5,
bei dem das Formteil (4) vor dem Umschmelzen an Stellen (14, 14, ...) an das Substrat (3) punktuell angeschweißt wird.

7. Verfahren nach einem oder mehreren der Ansprüche 1 bis 6,
bei dem kein Lotmaterial für das Formteil (7) verwendet wird,
insbesondere das kein Bor (B) und/oder kein Silizium (Si) als Schmelzpunkterniedriger aufweist.

8. Verfahren nach einem oder mehreren der Ansprüche 1 bis 7,
bei dem das Substrat (3) partiell mit aufgeschmolzen wird.
